**Europäisches Patentamt**

**European Patent Office**

**Office européen des brevets**

(11) Veröffentlichungsnummer : **0 367 986 B1**

(12) **EUROPÄISCHE PATENTSCHRIFT**

(45) Veröffentlichungstag der Patentschrift :
**03.06.92 Patentblatt 92/23**

(21) Anmeldenummer : **89118370.9**

(22) Anmeldetag : **04.10.89**

(51) Int. Cl.⁵ : **B60G 9/00,** B60G 11/46,
B60G 5/047, B62D 13/04

(54) **Achsaufhängung für eine selbstlenkende LKW-Sattelanhänger-Hinterachse.**

(30) Priorität : **08.10.88 DE 8812669 U**

(43) Veröffentlichungstag der Anmeldung :
**16.05.90 Patentblatt 90/20**

(45) Bekanntmachung des Hinweises auf die
Patenterteilung :
**03.06.92 Patentblatt 92/23**

(84) Benannte Vertragsstaaten :
**AT BE CH DE ES FR GB GR IT LI LU NL SE**

(56) Entgegenhaltungen :
**EP-A- 0 190 725**
**FR-A- 2 450 707**
**FR-A- 2 543 073**
**US-A- 3 241 854**
**US-A- 3 944 245**

(73) Patentinhaber : **FELDBINDER & BECKMANN**
**oHG**
**Gutenbergstrasse 12**
**W-2090 Winsen/Luhe (DE)**

(72) Erfinder : **Beckmann, Jan-Dirk**
**Gutenbergstrasse 12**
**W-2090 Winsen/Luhe (DE)**
Erfinder : **Feldbinder, Otto**
**Bahnhofstrasse 14**
**W-3044 Neuenkirchen (DE)**

(74) Vertreter : **Richter, Werdermann & Gerbaulet**
**Neuer Wall 10**
**W-2000 Hamburg 36 (DE)**

## Beschreibung

Die Erfindung geht aus von einer Achsaufhangung für eine selbstlenkende LKW-Sattelanhänger-Hinterachse mit einem an einem aus Längsträgern und Querträgern gebildeten Chassisrahmen ein- oder beidseitig angelenktem als Lenkerfeder oder Blattfedereinheit ausgebildeten Träger, an dem eine Achse mit einem Achsschenkelbolzen tragende Lagerung angeordnet ist, wobei ein von einer Felge getragenes und einer Bremstrommel befestigtes Fahrzeugrad um den Achsschenkelbolzen schwenkbar angeordnet ist.

Bei Lastkraftwagen bzw. Sattelanhängern ist es bekannt, insbesondere bei langen Radständen, selbstlenkende Achsen bzw. Nachlaufachsen zu verwenden. Die selbstlenkende Nachlaufachse führt dabei die Räder an Achsschenkel-bolzen, deren Drehpunkte vor der Achse angeordnet sind. Die Räder sind dabei beispielsweise über Lenkspurhebel, über Spurstangen oder Umlenkhebel miteinander verbunden. Bei Kurvenfahrt werden die Räder durch die Seitenkräfte ausgelenkt. Die Rückstellung in die Geradeausfahrt wird durch den Nachlauf der Räder erreicht. Eine derartige, dem Oberbegriff des Anspruchs 1 entsprechende Radaufhangung ist aus FR-A-2 450 707 bekannt.

Bei solchen Nachlaufachsen kann vorgesehen sein, einen Druck-luft-Membranzylinder zu verwenden, der lastabhängig eine Kurvenplatte gegen die am Umlenkhebel angebrachte Gleitrolle drückt. Dadurch wird die Rückstellung der Räder unterstützt und ein Schlingern der Räder in Geradeausfahrt verhindert. Um ein ungewolltes Lenken bei der Rückwärtsfahrt zu verhindern, wird über eine Sperre der Umlenkhebel blockiert.

Derartige Achsen haben sich bereits vielfach bewährt und werden in neuerer Zeit aufgrund geänderter gesetzlicher Bestimmungen längere Radstände wieder eingesetzt.

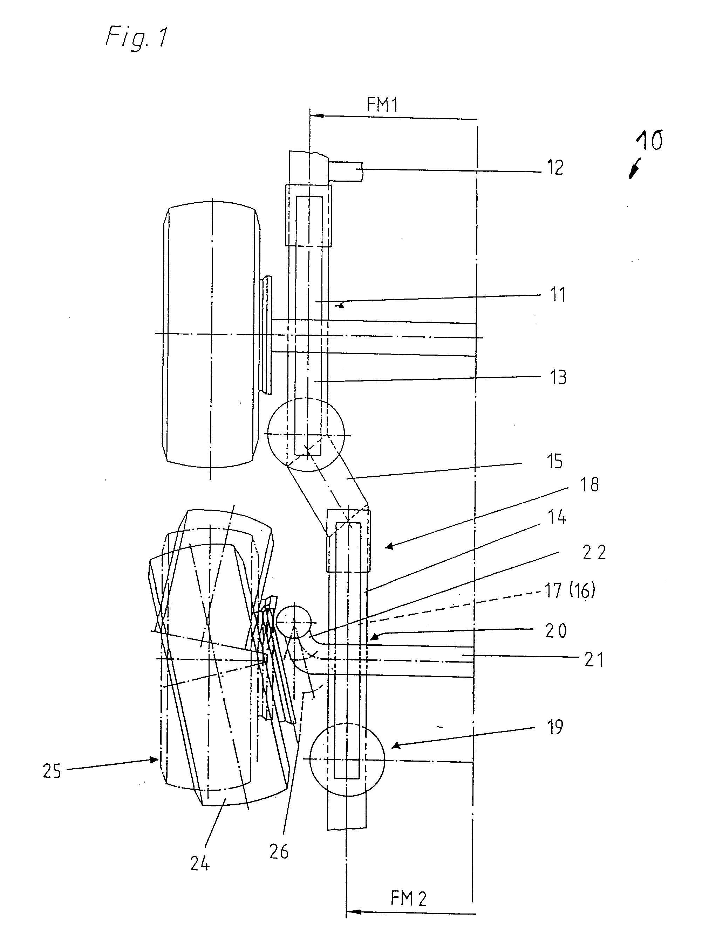

Wie in Fig.1 dargestellt ist, ist es bisher zur Realisierung einer selbstlenkenden Nachlaufachse notwendig, den aus Längsträgern bestehenden Chassisrahmen in ganz spezieller Weise auszubilden. Im Bereich der selbstlenkenden Nachlaufachse werden die Längsträger mit einer nach innen gerichteten Kröpfung versehen, um den notwendigen Platz zur Anordnung des Achsschenkelbolzens und der voranstehend erwähnten Elemente zur Lenkung der Achse zu schaffen. Dabei ergibt sich einerseits der Nachteil des aufwendigeren Aufbaues des Fahrzeugchassis. Darüber hinaus ist noch festzustellen, daß im Bereich der selbstlenkenden Nachlaufachse die sog. Federmitte, d.h. der Abstand des Federungsmittelpunktes zur Fahrzeugmittelachse verringert ist. Hierdurch ergibt sich ein verringerter Hebelarm der Federung in bezug auf den Fahrzeugaufbau, so daß Bewegungen des Fahrzeugaufbaues schlechter abgefangen werden können. Aufgrund dieser Nachteile besteht daher der Wunsch, eine selbstlenkende Nachlaufachse mit all ihren Vorteilen an einem Chassisrahmen aufzuhängen, ohne daß es notwendig ist, diesen gegenüber einer Starrachskonstruktion zu verändern und ohne daß das Maß der Federmitte verringert wird.

Es ist zwar bereits für einen PKW-Vorderradantrieb eine Achsaufhängung vorgeschlagen worden, die möglicherweise für eine selbstlenkende LKW-Sattelanhänger-Hinterachse geeignet wäre, mit einem an einem aus Längsträgern und Querträgern gebildeten Chassisrahmen beidseitig angelenkten als Blattfedereinheit ausgebildeten Träger, an dem eine eine Achse mit einem Achsschenkelbolzen tragende Lagerung angeordnet ist, wobei ein von einer Felge getragenes Fahrzeugrad um den Achsschenkelbolzen schwenkbar angeordnet ist, wobei der Träger mindestens einmal in einer horizontalen Ebene gekröpft ausgebildet ist, und einen ersten, an dem Längsträger angelenkten Abschnitt und einen zweiten, sich über einen Doppelwinkelabschnitt anschließenden Tragabschnitt aufweist, wobei die Lagerung der Achse an dem Tragabschnitt angeordnet ist (US-A-3,241,854).

Diese Anordnung kann jedoch bei den in Rede stehenden LKW-Hinterachsen keine Anwendung finden, da hier die Nachlaufachse breiter wäre als die anderen Achsen, was nicht sinnvoll und nicht zulässig ist.

Es ist daher Aufgabe der Erfindung, eine Achsaufhängung für selbstlenkende LKW-Hinterachsen derart zu schaffen, daß die Lenkeigenschaften der selbstlenkenden Nachlaufachse erhalten bleiben und gleichzeitig der Chassisrahmen gegenüber der Anordnung einer Starrachse unverändert bleibt und daß das Federmittenmaß erhalten bleibt.

Zur Lösung dieser Aufgabe wird eine Achsaufhängung der eingangs genannten Art vorgeschlagen, bei der vorgesehen ist, daß der Träger mindestens einmal in einer horizontalen Ebene gekröpft ausgebildet ist und einen ersten, an einem Längsträger angelenkten Abschnitt und einen zweiten sich über einen Doppelwinkelabschnitt anschließenden Tragabschnitt aufweist, wobei die Lagerung der Achse an dem Tragabschnitt angeordnet ist und die Achsenmittellinie des Tragabschnittes gegenüber der Achsenmittellinie des ersten Abschnittes nach innen versetzt ist.

Durch diese Ausbildung wird es möglich, die Längsträger oder auch Gurte des Rahmenchassis unverändert geradlinig auszubilden und das Federmittenmaß entweder beizubehalten oder nur geringfügig zu reduzieren. Durch die Kröpfung der Lenkerfeder oder der Blattfedereinheit so, daß infolge der doppelwinkligen Abbiegung die Achsenmittellinie des Tragschnittes nach innen versetzt ist, wird der notwendige Raum geschaffen, um unterhalb des Längsträgers den Achsschenkelbolzen anzuordnen, um den dann das Fahrzeugrad um eine Hochachse verschwenkbar und damit lenkbar ist. Bei dieser Anordnung kann ein Lenkeinschlag des gelenkten Rades erreicht werden, der dem StVZO-Kraft-Kreis entspricht.

Bevorzugterweise ist vorgesehen, daß der Träger als Lenkerfeder ausgebildet ist und an seinem Tragabschnitt über einen an sich bekannten Luftbalg gegen den Chassisrahmen abgestützt ist. Dabei ist es möglich, daß der Luftbalg gegenüber dem Längsträger versetzt angeordnet und über einen als Traverse dienenden Querträger abgestützt ist, andererseits kann vorteilhafterweise auch vorgesehen werden, daß der Träger einen sich über einen weiteren Doppelwinkelabschnitt anschließenden dritten Abschnitt aufweist, wobei dann der dritte Abschnitt über den Luftbalg am Chassisrahmen angelenkt ist. Diese Ausführungsform hat den Vorteil, daß das Federmittenmaß der Starrachse auch bei der Konzeption der selbstlenkenden Achse in vollem Umfang erhalten bleibt.

Die gleiche Konzeption kann natürlich auch für ein Blattfederaggregat vorgesehen sein. Der dann als Blattfeder ausgebildete Träger ist dann ebenfalls mindestens einmal in einer horizontalen Ebene gekröpft ausgebildet und weist einen ersten an dem Längsträger angelenkten Abschnitt und einen zweiten sich über einen Doppelwinkelabschnitt anschließenden Tragabschnitt auf, wobei die Lagerung der Achse an dem Tragabschnitt angeordnet ist.

Mit dieser neuen Konzeption ist es möglich geworden, die Vorteile eines durchgehenden und ungekröpften Chassisrahmens mit den Vorteilen einer selbstlenkenden Nachlaufachse zu verbinden, ohne hier Nachteile in Kauf nehmen zu müssen.

Weitere vorteilhafte Ausführungsformen der Erfindung sind in den Unteransprüchen gekennzeichnet.

Ausführungsbeispiele der Erfindung werden nachstehend anhand der Zeichnung näher erläutert.

Es zeigen

**Fig.** 1 in einer rein schematischen Ansicht von oben einen Chassisrahmen mit einer Starrachse und einer selbstlenkenden Nachlaufachse mit einer an sich bekannten Achsaufhängung,

**Fig.** 2 in einer rein schematischen Ansicht von oben einen Chassisrahmen mit einer erfindungsgemäßen Achsaufhängung,

**Fig.** 3 in einer schematischen Seitenansicht gemäß Linie III-III in Fig. 2 die Achsaufhängung gem. Fig .2,

**Fig.** 4 in einer rein schematischen Ansicht von oben eine weitere Ausführungsform einer Achsaufhängung, und

**Fig.** 5 in einer schematischen Seitenansicht die Achsaufhängung gem. Fig .4.

In Fig.1 ist ein Chassisrahmen 10 dargestellt, der aus Längsträgern 11 und Querträgern 12 besteht, wobei zur Schaffung eines Freiraums für eine selbstlenkende Nachlaufachse der Längsträger 11 in einen vorderen Längsträgerabschnitt 13 und einen hinteren Längsträgerabschnitt 14 unterteilt sind, die über einen als Kröpfung ausgebildeten Doppelwinkelabschnitt 15 verbunden sind.

Im Bereich des hinteren Längsträgerabschnittes 14 ist als Träger 16 des Achsaggregates eine Lenkerfeder 17 angeordnet, die an dem Längsträger 11 über ein als Silentblock ausgebildetes Gelenk 18 angelenkt ist. An ihrem freien Ende wird die Lenkerfeder 17 über einen Luftfederbalg 19 gegenüber dem Chassisrahmen 10 abgestützt.

An der Lenkerfeder 17 ist die Lagerung 20 für die Achse 21 befestigt, wobei der Achsschenkelbolzen 22 der Achse 21 in dem durch die Kröpfung 15 des Längsträgers 11 gebildeten Freiraum angeordnet ist, so daß das Rad 24, das auf einer an der Bremstrommel 26 gehaltenen Felge 25 angeordnet ist, die notwendigen Lenkbewegungen um den Achsschenkelbolzen 22 durchführen kann.

Wie sich aus der Darstellung ergibt, besteht der Nachteil dieser bekannten Ausführungsform darin, daß der Längsträger 11 nicht durchgehend konzipiert werden kann, sondern mit der Kröpfung 15 versehen werden muß, darüber hinaus ist das Federmittenmaß FM2 im Bereich der selbstlenkenden Nachlaufachse gegenüber dem Federmittenmaß FM1 der Starrachse stark verringert, was zu einer Verringerung der Federungs- und Dämpfungswirkung führt.

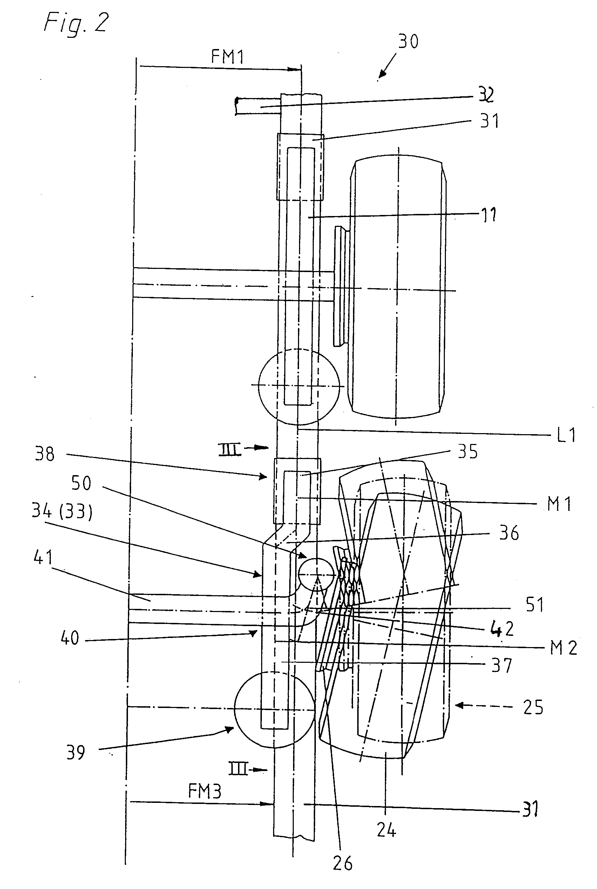

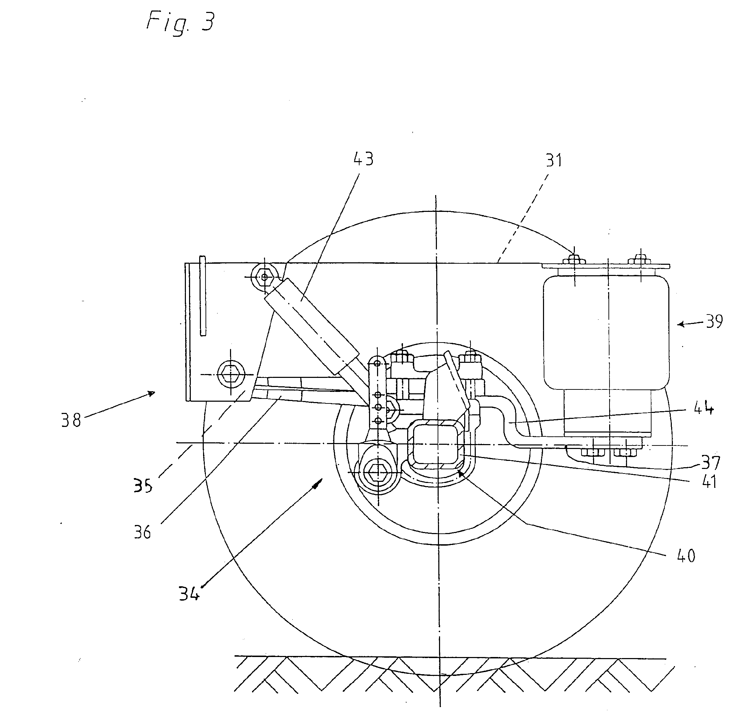

Bei der in Fig. 2 und 3 dargestellten Achsaufhängung besteht der Chassisrahmen 30 ebenfalls aus Längsträgern 31 und Querträgern 32. Der Längsträger 31 ist hier jedoch ohne Kröpfung durch laufend ausgebildet und an dem Längsträger 31 ist als Träger 33 eine Lenkerfeder 34 angelenkt, die einen ersten Abschnitt 35, einen als Kröpfung ausgebildeten Doppelwinkelabschnitt 36 und einen sich hieran anschließenden Tragabschnitt 37 aufweist. Die Lenkerfeder 34 ist dabei über das als bevorzugterweise als Silentblock ausgebildete Gelenk 38 am Längsträger 31 befestigt, während der Tragabschnitt 37 sich über den Luftfederbalg 39 und den Querträger 33 am Chassisrahmen 30 abstützt.

Am Tragabschnitt 37 der Lenkerfeder 34 ist die Lagerung 40 für die Achse 41 angeordnet, die in ihrem Aufbau der Achsausbildung gemäß Fig. 1 entspricht. Der Fußpunkt 51 des Achsschenkelbolzens 42 ist dabei in dem durch die Kröpfung 36 der Lenkerfeder 34 geschaffenen Freiraum 50 unterhalb des Längsträgers 31 angeordnet.

Bei dieser Ausführungsform ist das relevante Federmittenmaß FM3 nur geringfügig kleiner als das Feder-

3

mittenmaß FM1 im Bereich der Starrachse.

Die Lenkerfeder 34, die zur Schaffung dieser Möglichkeiten in einer horizontalen Ebene mindestens einmal gekröpft ausgebildet ist, kann dabei in allen anderen Punkten wie eine an sich bekannte Lenkerfeder ausgebildet sein. So kann eine Kröpfung 44 in einer vertikalen Ebene vorgesehen sein und an der Lagerung 40 der Achse 41 kann ein Stoßdämpfer 43 in üblicher Weise angelenkt sein.

Die spezielle Ausbildung der Lenkerfeder 34 besteht dabei darin, daß der Doppelwinkelabschnitt 36 als Kröpfung in einer horizontalen Ebene so angeordnet ist, daß die Achsenmittellinie M1 des Abschnittes 35 in einer Vertikalebene parallel zur Längsmittelachse L1 des Längsträgers 31 liegt und daß die Achsenmittellinie M2 des Trägerabschnittes 37 in einer Horizontalebene parallel zur Achsenmittellinie M1 des ersten Abschnittes 35 verläuft.

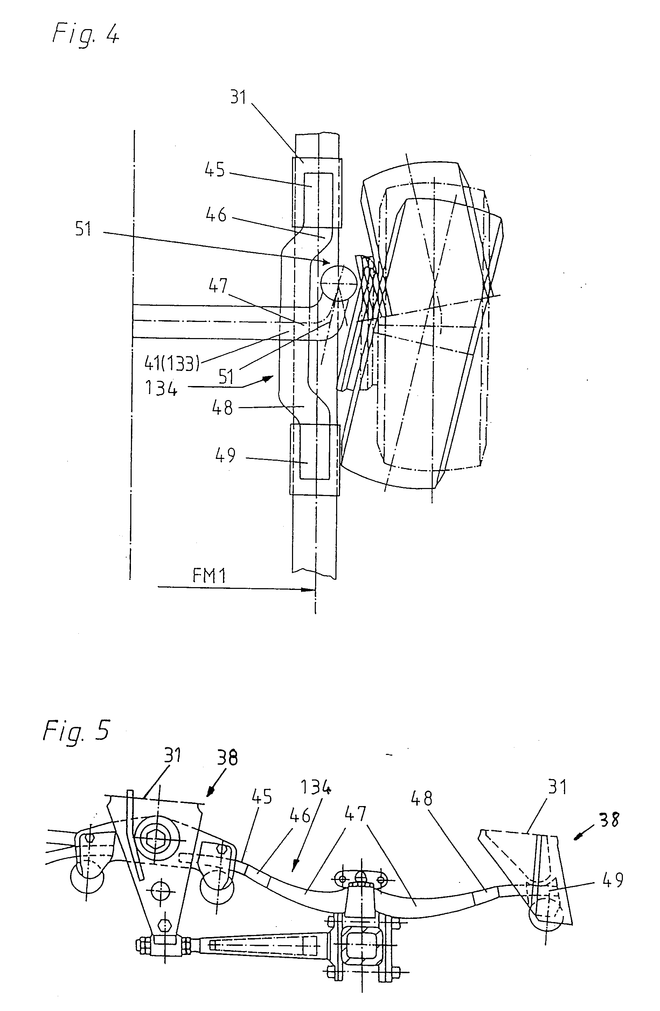

Wie in Fig. 4 und 5 dargestellt ist, kann der Träger 133 auch als Blattfeder bzw. Blattfederpaket 134 ausgebildet sein. Die Blattfeder 134 ist dabei bevorzugterweise in einer horizontalen Ebene zweimal gekröpft ausgebildet und weist einen ersten an dem Längsträger 31 angelenkten Abschnitt 45 auf, an dem sich als Kröpfung ein Doppelwinkelabschnitt 46 anschließt, der den ersten Abschnitt 45 mit dem Tragabschnitt 47 verbindet, der über einen weiteren als Kröpfung ausgebildeten Doppelwinkelabschnitt 48 in einen dritten am Längsträger 31 angelenkten Abschnitt 49 übergeht. Die Anlenkung an den Längsträger 31 ist dabei über entsprechende Lagerungen (38), die wiederum als Silentblöcke ausgebildet sein können, vorgesehen.

Unabhängig von der Art der Ausbildung des Trägers 33 bzw. 133 als Lenkerfeder 34 oder Blattfeder 134 ist bei der vorgesehenen Achsaufhängung am Chassisrahmen gewährleistet, daß die Querkraftaufnahme und Übertragung auf den Chassisrahmen in gleicher Weise wie bei einer Starrachse erfolgt und daß insbesondere die Kraftangriffspunkte weit außen liegen.

## Patentansprüche

1. Achsaufhängung für eine selbstlenkende LKW-Sattel arhänger-Hinterachse mit einem an einem aus Längsträgern (31) und Querträgern (32) gebildeten Chassisrahmen (30) ein- oder beidseitig angelenktem als Lenkerfeder (34) oder Blattfedereinheit (134) ausgebildeten Träger (33;133), an dem eine eine Achse (41) mit einem Achsschenkelbolzen (42) tragende Lagerung (40) angeordnet ist, wobei ein von einer Felge (25) getragenes und an einer Bremstrommel (26) befestigtes Fahrzeugrad (24) um den Achsschenkelbolzen (42) schwenkbar angeordnet ist, dadurch gekennzeichnet, daß der Träger (33;133) mindestens einmal in einer horizontalen Ebene gekröpft ausgebildet ist und einen ersten, an einem Längsträger (31) angelenkten Abschnitt (35;45) und einen zweiten sich über einen Doppelwinkelabschnitt (36;46) anschließenden Tragabschnitt (37;47) aufweist, wobei die Lagerung (40) der Achse (41) an dem Tragabschnitt (37;47) angeordnet ist und die Achsenmittellinie (M2) des Tragabschnittes (37;47) gegenüber der Achsenmittellinie (M1) des ersten Abschnittes (35;45) nach innen versetzt ist.

2. Achsaufhängung nach Anspruch 1, dadurch gekennzeichnet, daß der Träger (33) als Lenkerfeder (34) ausgebildet ist und an seinem Tragabschnitt (37) über einen an sich bekannten Luftbalg (39) gegen den Chassisrahmen (30) abgestützt ist.

3. Achsaufhängung nach Anspruch 2, dadurch gekennzeichnet, daß der Luftbalg (39) über einen als Traverse dienenden Querträger (32) gegen den Chassisrahmen (30) abgestützt ist.

4. Achsaufhängung nach Anspruch 1, dadurch gekennzeichnet, daß der Träger (133) als Blattfeder (134) ausgebildet ist.

5. Achsaufhängung nach einem der Ansprüche 1 bis 4, dadurch gekennzeichnet, daß der Träger (33;133) einen sich über einen weiteren Doppelwinkelabschnitt (48) anschliessenden dritten Abschnitt (49) aufweist, wobei der dritte Abschnitt (49) am Chassisrahmen (30) angelenkt ist.

6. Achsaufhängung nach einem der Ansprüche 1 bis 5, dadurch gekennzeichnet, daß der erste Doppelwinkelabschnitt (46) und der zweite Doppelwinkelabschnitt (48) jeweils gleiche Winkel aufweisen.

7. Achsaufhängung nach einem der Ansprüche 1 bis 5, dadurch gekennzeichnet, daß der erste Doppelwinkelabschnitt (46) und der zweite Doppelwinkelabschnitt (48) spiegelsymmetrisch ausgebildet sind.

8. Achsaufhängung nach einem der Ansprüche 1 bis 7, dadurch gekennzeichnet, daß der Träger (33,133) mit dem Doppelwinkelabschnitt (36;46) als Kröpfung so angeordnet ist, daß die Achsenmittellinie (M1) des Abschnitts (35;45) in einer Vertikalebene parallel zur Längsmittelachse (L1) des Längsträgers (31) liegt und daß die Achsenmittellinie (M2) des Trägerabschnittes (37;47) in einer Horizontalebene parallel zur Achsenmittellinie (M1) des ersten Abschnittes (35;45) verläuft, wobei in einem durch die Kröpfung (36;46) des Trägers (33;133) gebildeten und durch die Achsenmittellinie (M1) und die Achsenmittellinie (M2) begrenzter Freiraum (50) ein Fußpunkt (51) des Achsschenkelbolzens (22) angeordnet ist.

9. Achsaufhängung nach einem der Ansprüche 1 bis 8, dadurch gekennzeichnet, daß anstelle des ersten Doppelwinkelabschnittes (36;46) und/oder des weiteren Doppelwinkelabschnittes (48) jeweils ein entsprechender Abschnitt mit kontinuierlich verlaufenden Krümmungsänderungen und z.B. S-förmiger Kontur vorgesehen ist.

## Claims

1. Axle suspension for a self-steering semi-trailer rear axle with a supporting arm (33;133) hinged on one or on both sides in the form of a steering spring (34) or a leaf spring unit (134) to a chassis frame formed of longitudinal bars (31) and crossbars (32, on which an axle (40) with a mounting assembly (42) supporting a steering stub axle bolt (42) is disposed, while a vehicle wheel (24), borne by a wheel rim (25) and secured to a brake drum (26) is disposed so as to be swivellable about the steering stub axle bolt (42), characterized in that the supporting arm (33;133) is constructed so as to be bent at right angles at least once in a horizontal plane and is provided with a first section (35;45) hinged on to a longitudinal bar (31) and a second supporting section (37;47) adjoining via a double-angle section (36;46), the mounting assembly (40) of the axle (41) being disposed on the supporting section (37;47) and the axle center line (M2) of the supporting section (37;47) being inwardly staggered in comparison with the axle center line (M1) of the first section (35;45).

2. Axle suspension according to Claim 1, characterized in that the supporting arm (33) is constructed in the form of a steering spring (34) and, on its supporting section (37), is supported on the chassis frame (30) by means of an air bellows (39) known per se.

3. Axle suspension according to Claim 2, characterized in that the air bellows (39) is supported on the chassis frame (30) with the aid of a crossbar (32) serving as an extension arm.

4. Axle suspension according to Claim 1, characterized in that the supporting arm (133) is constructed in the form of a leaf spring (134).

5. Axle suspension according to any of Claims 1 to 4, characterized in that the supporting arm (33;133) is provided with a third section (49) adjoining via a further double-angle section (49), the third section (49) being hinged on to the chassis frame (30).

6. Axle suspension according to any of Claims 1 to 5, characterized in that the first double-angle section (46) and the second double-angle section (48) each possess uniform angles.

7. Axle suspension according to any of Claims 1 to 5, characterized in that the first double-angle section (46) and the second double-angle section (48) are constructed so as to possess mirror symmetry.

8. Axle suspension according to any of Claims 1 to 7, characterized in that the supporting arm (33;133) with the double-angle section (36;46) as a bend is disposed in such a way that the axle center line (M1) of the section (35;45) lies in a vertical plane parallel to the longitudinal center axis (L1) of the longitudinal bar (31), and in that the axle center line (M2) of the supporting arm section (37; 47) proceeds in a horizontal plane parallel to the axle center line (M1) of the first section (35;45), in which case, in a clearance (50) formed by the bend (36;46) of the supporting arm (33;133) and delimited by the axle center line (M1) and the axle center line (M2), a foot (51) of the steering stub axle bolt (22) is disposed.

9. Axle suspension according to any of Claims 1 to 8, characterized in that, in lieu of the first double-angle section (36;46) and/or the further double-angle section (48), in each case a corresponding section with continuously proceeding variations in curvature and,for instance, an S-shaped contour is provided.

## Revendications

1. Suspension d'essieu pour un essieu arrière autodirecteur de semi-remorque avec une console (33 ; 133), configurée comme un ressort de suspension (34) ou une unité de ressort à lames (134), articulée d'un ou des deux côtés sur un cadre de châssis (30) formé par des longerons (31) et des entretoises transversales (32), console sur laquelle est placé un support (40) qui porte un axe (41) avec un pivot d'essieu avant (42), une roue de véhicule (24) portée par une jante (25) et fixée à un tambour de frein (26) étant placée en étant pivotante autour du pivot d'essieu avant (42), **caractérisée en ce** que la console (33 ; 133) est formée en étant contrecoudée au moins une fois dans un plan horizontal et qu'elle présente une première section (35 ; 45) articulée sur un longeron (31) et une seconde section porteuse (37 : 47) qui s'y rattache par l'intermédiaire d'une section à angle double (36 ; 46), le support (40) de l'essieu (41) étant placé sur la section porteuse (37 ; 47) et l'axe de symétrie (M2) de la section porteuse (37 ; 47) étant décalé vers l'intérieur par rapport à l'axe de symétrie (M1) de la première section (35 ; 45).

2. Suspension d'essieu selon la revendication 1, **caractérisée en ce** que la console (33) est configurée comme un ressort de suspension (34) et qu'elle s'appuie contre le cadre de châssis (30) par un soufflet à air (39) connu en soi sur sa section porteuse (37).

3. Suspension d'essieu selon la revendication 2, **caractérisée en ce** que le soufflet à air (39) s'appuie contre le cadre de châssis (30) par une entretoise transversale (32) qui sert de traverse.

4. Suspension d'essieu selon la revendication 1, **caractérisée en ce** que la console (133) est configurée comme un ressort à lames (134).

5. Suspension d'essieu selon l'une des revendications 1 à 4, **caractérisée en ce** que la console (33 ; 133) présente une troisième section (49) qui suit par l'intermédiaire d'une autre section à angle double (48), la troisième section (49) étant articulée sur le cadre du châssis (30).

6. Suspension d'essieu selon l'une des revendications 1 à 5, **caractérisée en ce** que la première section à angle double (46) et la seconde section à angle double (48) présentent des angles respectivement égaux.

7. Suspension d'essieu selon l'une des revendications 1 à 5, **caractérisée en ce** que la première section à angle double (46) et la seconde section à angle double (48) sont configurées en étant exactement symétriques.

8. Suspension d'essieu selon l'une des revendications 1 à 7, **caractérisée en ce** que la console (33, 133) avec la section à angle double (36 ; 46) comme coudure est placée de telle manière que l'axe de symétrie (M1) de la section (35 ; 45) se situe dans un plan vertical parallèlement à l'axe longitudinal (L1) du longeron (31) et que l'axe de symétrie (M2) de la section de support (37 ; 47) se situe dans un plan horizontal parallèlement à l'axe de symétrie (M1) de la première section (35 ; 45), un pied (51) du pivot d'essieu avant (22) étant placé dans un espace libre (50) formé par la coudure (36 ;46) de la console (33 ; 133) et délimité par l'axe de symétrie (M1) et par l'axe de symètrie (M2).

9. Suspension d'essieu selon l'une des revendications 1 à 8, **caractérisée en ce** qu'une section correspondante avec des variations de courbure continues et, par exemple, un contour en forme de S est respectivement prévue à la place de la première section à angle double (36 ; 46) et/ou de l'autre section à angle double (48).

Fig. 1

FM1

10

12

11

13

15

18

14

22

17 (16)

20

21

19

25

24

26

FM 2

EP 0 367 986 B1

Fig. 2

8

Fig. 3

Fig. 4

31
45
46
51
47
41(133)
134
51
48
49

FM1

Fig. 5

31    38    45    134    48    31
46    47         38

49